# EUROPEAN PATENT APPLICATION

(11) **EP 2 252 095 A1**
(43) Date of publication of application: **17.11.2010**
(21) Application number: 09717890.9
(22) Date of filing: 03.03.2009
(51) Int. Cl.: H04W 8/26, H04W 8/04, H04W 80/04

(54) **MOBILE TERMINAL AND NETWORK NODE**

(30) Priority: 06.03.2008 JP 2008056453; 22.08.2008 JP 2008214292
(71) Applicant: Panasonic Corporation, Kadoma-shi Osaka 571-8501 (JP)
(72) Inventor: HIRANO, Jun, Osaka-shi, Osaka 540-6207 (JP); ARAMAKI, Takashi, Osaka-shi, Osaka 540-6207 (JP); IKEDA, Shinkichi, Osaka-shi, Osaka 540-6207 (JP)
(74) Representative: Grünecker, Kinkeldey, Stockmair & Schwanhäusser Anwaltssozietät
(86) International application number: PCT/JP2009/000955
(87) International publication number: WO 2009/110225

(57) **Abstract**

Disclosed is a technique to enable a mobile terminal to grasp an address handling method used for each service and hence to achieve more efficient communication. According to this technique, a mobile terminal (UE) 15 inquires a home PMIPv6 domain 10 about a method of handling each address currently maintained by the mobile terminal (e.g., which address should be used as an MIPv6 home address (HoA)) in a state of being attached to the home PMIPv6 domain 10 before starting MIPv6 as a mobile management protocol, and acquires and stores the inquiry result in advance. Then, for example, when moving to a foreign network 20 and starting MIPv6, the stored inquiry result is referred to select an address appropriate as an HoA in order to perform a search for a HA (Home Agent) and BU (Binding Update) transmission.

## Description

### TECHNICAL FIELD

The present invention relates to a communication technique for a packet-switched data communication network, and more particularly to a communication technique used when a mobile terminal performs communication using a mobility management protocol such as MIP (Mobile Internet Protocol).

### BACKGROUND ART

Today, one base station has a wireless communication function such as cellular communications covering a medium to long-range coverage area, a wireless Local Area Network (LAN) function the coverage area of which is a relatively short range and the like, and there exist systems for providing communication services using networks composed of multiple heterogeneous networks and wireless communication terminals connectable to these networks.

As a network composed of multiple heterogeneous networks, Third Generation Partnership Project (3GPP) has maintained discussions about wireless communication terminals having functions for communication with various heterogeneous networks, such as cellular network (3G network), wireless LAN, and Worldwide Interoperability for Microwave Access (WiMAX) type wireless wide area network (WWAN), and related communication technology.

Especially, there have been discussions aiming at realizing seamless mobility in such heterogeneous networks and support of multiple application services with high Quality of Service (QoS) such as for real-time video, Voice over Internet Protocol (VoIP), and critical data.

For example, Non-Patent Document 1 cited below describes a technique relating to address assignment when a terminal moves and attaches to a non-3G network. For mobility management on such 3G/non-3G networks, use of Proxy Mobile IPv6 (PMIPv6) described in Non-Patent Document 2 cited below has been considered.

Since PMIPv6 is to support local mobility using a function on the network side, such a situation that a mobile terminal itself performs mobility management may arise for some reason, such as when the network side does not support PMIPv6 or when required for communication with a correspondent terminal. In this case, the mobile terminal can use Mobility Support in IPv6 (MIPv6), for example, described in Non-Patent Document 3 cited below to perform its mobility management.

In the case of PMIPv6, a terminal connected to a network (PMIPv6 domain) supporting PMIPv6 mobility management is assigned an address or a prefix from a Local Mobility Anchor (LMA) performing mobility management or any other node in the network. The terminal uses this address (or an address formed from this prefix) as its address in a PMIPv6 domain. Even when the terminal moves in the PMIPv6 domain, since terminal position information managed by the LMA is updated by Mobile Access Gateways (MAGs) as access points to the PMIPv6 domain, packets forwarded from the LMA are reachable to the terminal via an appropriate MAG (MAG to which the terminal is connected) by means of forwarding between the LMA and the MAG.

In such a situation, two or more addresses may be assigned to the terminal regardless of the number of interfaces of the terminal depending on various factors, such as the service, the destination, and the status of the connection to a roaming network. Further, there may be two or more LMAs for the terminal depending on the status of roaming or the like, but in many cases, the terminal does not recognize the difference between these LMAs.

On the other hand, in MIPv6, an address (globally reachable address) reachable from a global network is acquired from a Home Agent (HA) as a Home Address (HoA) of the terminal, and when the terminal moves, a Care-of Address (CoA) acquired at the destination is registered with the HA in association with the HoA so that packets will be forwarded by the HA and become reachable to the terminal regardless of to which network the terminal is attached. Even in this case, the terminal may maintain two or more addresses (two or more HoAs and/or two or more CoAs). The number of HAs may also be two or more. In this case, the registration destination (i.e., HA) with which the moving of the terminal is registered may vary, or the HoA managed by each HA may vary. In this case, since a HoA managed by a first HA is not a HoA managed by a second HA, the terminal may be able to register the HoA (HoA managed by the first HA) as a CoA managed by the second HA, though not be able to register it as the HoA managed by the second HA.

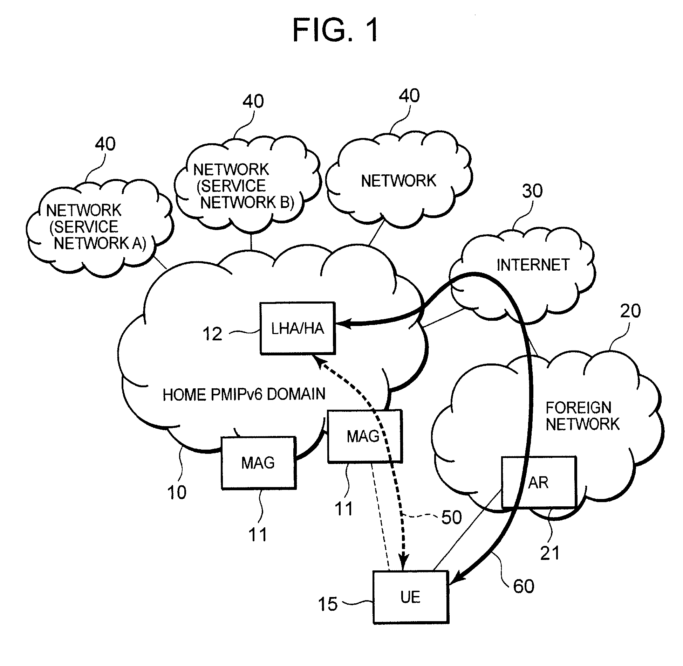

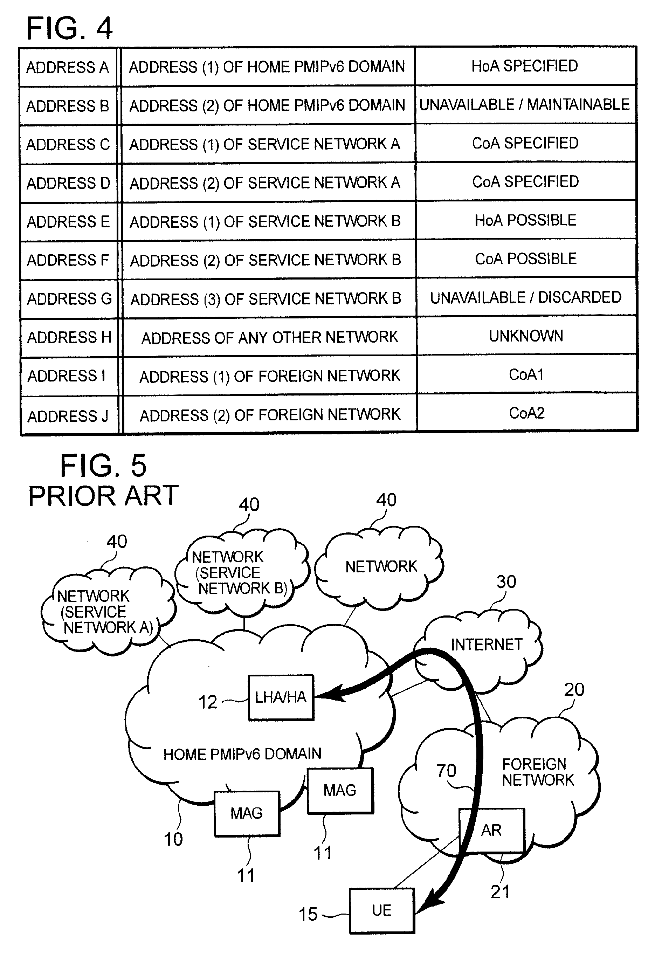

FIG. 5 is a diagram showing an example of a conventional network system. The network configuration shown in FIG. 5 is the same as the network configuration shown in FIG. 1 to be described later, and each component will be complementally described in detail with reference to FIG. 1 (to be described later). In an initial condition, a mobile terminal (User Equipment (UE) 15) is attached to a non-3G network as a home operator network. This network employs PMIPv6 for local mobility management, and it is mentioned here as a home PMIPv6 domain 10. The UE 15 is away from this home PMIPv6 domain 10 and changes the access point to a foreign network (external network) 20. At this time, since the UE 15 is attached outside the home PMIPv6 domain 10 and needs continuous connectivity, it starts mobility management using MIPv6.

In FIG. 5, it is assumed that the UE 15 performs MIPv6 initialization after changing the access point to the foreign network 20 because the UE 15 did not perform MIPv6 mobility management while being attached to the home PMIPv6 domain 10. In this case, for example, the UE 15 performs processing for searching for an appropriate HA to set, as the HoA, the address (PMIPv6 address) assigned by the home operator before moving, and performs transmission processing for a BU (Binding Update) to the HA as a result of searching to associate, as a CoA, the HoA with an address given at the destination network.

Further, in Internet Engineering Task Force (IETF), a technique for network mobility (NEMO) support, in which the concept of mobility support (MIPv6 mentioned above) for individual hosts is extended to mobility support for networks of mobile nodes (mobile networks of mobile routers), is specified, for example, in Non-Patent Document 4 cited below. According to this Non-Patent Document 4, a mobile router (MR) having a mobile network provides a mechanism in which any node in the mobile network becomes reachable even when it is connected to any access point to the Internet.

Non-Patent Document 4 also describes that a network prefix used by the node in the mobile network is indicated when the mobile router sends a BU message to a home agent. For example, a special option called a network prefix option is inserted in the BU message to enable the mobile router to indicate the network prefix. Thus, the home agent creates a routing table based on the prefix so that packets to be sent to a destination address having this network prefix can be forwarded to a care-of address of the mobile router.

Although the trend toward all IP networking for making all network systems be IP systems is mainstream, a Packet Switched (PS) domain for transmission of IP packets on a packet switched network and a Circuit Switched (CS) domain for transmission through a circuit switched network used in a conventional cellular system are mixed at present. The PS domain and the CS domain are independent of each other. Upon intercommunication between the CS domain and the PS domain, the network side has to change over, for example, from CS service to PS service or from PS service to CS service (e.g., conversion of information format).
Patent Document 1: Japanese Patent Application Publication No. 2000-183972
Non-Patent Document 1: 3GPP TS 23.402 V8.0.0, December, 2007
Non-Patent Document 2: IETF (Internet Engineering Task Force) Draft: draft-ietf-netlmm-proxymip6-00, April, 2007
Non-Patent Document 3: IETF RFC (Request for Comments): rfc3775, June, 2004
Non-Patent Document 4: IETF RFC (Request for Comments): rfc3963, January, 2005

However, even if the home domain of the mobile terminal is a PMIPv6 domain, it is not always true that an address given by the PMIPv6 domain meets the requirements for MIPv6 HoA. In other words, the address given by the PMIPv6 domain may not be available as the MIPv6 HoA. Even if it is available, use of it as the HoA may be inappropriate. Further, many addresses that meet the requirements for MIPv6 HoA may be assigned to the mobile terminal.

For example, in FIG. 5, a mobile terminal having two or more addresses sets all the addresses as HoA candidates and starts HA search processing for each address after changing the access point from the MIPv6 domain to a foreign network to start MIPv6. As a result of this HA search processing, any address for which no HA is found may exist. Even if HAs are found for addresses, the same HA (LMA) is often notified. Further, the mobile terminal performs processing for sending a BU to all addresses for which HAs are found and which are considered to be available as the HoA. Note that the mobile terminal cannot start MIPv6 communication until registration through this BU is completed.

Thus, since all addresses the mobile terminal received in the PMIPv6 domain before changing the network connection are addresses the mobile terminal had received in the home domain, any address may be available as the HoA. For example, when the mobile terminal has received two or more addresses such as a case where it has received an address for each service, the mobile terminal needs to send a HA search message to all the addresses to perform HA search processing. Although addresses managed by the same HA may exist in these addresses, since the mobile terminal cannot grasp this situation beforehand, the mobile terminal needs to send the HA search message related to each address upon HA search processing. Thus, the mobile terminal can eventually grasp that the addresses are managed by the same HA.

Further, as a result of the HA search processing, if there are two or more addresses the HA can support as HoAs and the HA responds to the HA search message for all the addresses, since all the addresses as HoAs are simply associated with an address as a CoA received from the destination, a BU needs to be sent to associate each HoA with the CoA. In this case, BUs corresponding to the number of HoAs need to be sent in principle. In other words, in the prior art, as indicated by the arrow (message flow 70) in FIG. 5, massive amounts of HA search messages and their response messages, and BU messages and their response messages (BA (Binding Acknowledgement) messages) are circulated in a short period of time.

Further, if any of the addresses received in the PMIPv6 domain (home domain) does not meet the requirements for the HoA (e.g., based on whether this address is globally reachable or a policy determining whether this address is available for a foreign network), the HA search processing totally ends up in failure, and there is a possibility that an address to be set as the HoA must be inquired of the home domain again.

Thus, when multiple mobile terminals move, massive signaling relating to mobility management is performed, resulting in a tight communication band or communication delay. This requires time for the mobile terminal to complete address registration, resulting in the possibilities of delay in starting actual communication, packet loss, non-attainment of the QoS requirement, reduction in throughput, etc. Further, the signaling relating to mobility management can also increase the processing load at a network node and increase the network traffic, resulting in the possibility of affecting communication of other mobile terminals.

Similarly, for example, in the case of switching over between the PS service and the CS service, a user terminal (UE) cannot grasp beforehand that an address used for the PS service meets the requirements for use in the CS service (or it is suited to use or a CS address can be generated therefrom). For example, if the UE has received incoming communication from CS while using the PS service, the UE can switch addresses. However, in this case, some kind of signaling, registration or the like is required, and this can cause problems, such as an increase in network traffic due to signaling, communication delay, packet loss, reduction in QoS or throughput and an increase in processing load, resulting in the possibility of affecting communication.

### DISCLOSURE OF THE INVENTION

In order to solve the above problems, it is an object of the present invention to provide a mobile terminal and a network node to enable the mobile terminal to grasp an address handling method used for each service and hence to achieve more efficient communication. In Particular, the present invention aims to provide a mobile terminal and a network node to enable the mobile terminal to complete the start of a mobility management protocol (various settings up to the start of communication) quickly when the mobile terminal uses the mobility management protocol to perform its mobility management. Further, the present invention aims to provide a mobile terminal and a network node, capable of completing communication settings quickly upon performing communication especially using a network system in which a PS domain and a CS domain are mixed.

In order to attain the above object, the mobile terminal of the present invention is a mobile terminal to establish a connection to a network in order to perform communication, comprising:
address management unit configured to manage one or plural addresses used to establish a connection to the network to perform communication;
mobility management protocol executing unit configured to allow the mobile terminal to perform mobility management thereof;
inquiry unit configured to, before the mobility management protocol executing unit runs the mobility management protocol, inquire the network side about an address handling method indicating how the mobility management protocol is to handle the address managed by the address management unit upon communication using the mobility management protocol; and
address handling method storing unit configured to acquire information on the address handling method for the address managed by the address management unit in response to the inquiry from the inquiry unit and store the information in such a manner that the mobility management protocol executing unit can refer to the information upon running the mobility management protocol.
This configuration enables quick completion of the start of the mobility management protocol (various settings up to the start of communication) when the mobile terminal uses the mobility management protocol to perform its mobility management.

In addition to the above configuration, the mobile terminal of the present invention may also be such that when there are two or more home agents for managing the address, the inquiry unit inquires each of the two or more home agents, respectively, and the address handling method storing unit stores each inquiry result for each home agent.
This configuration enables the mobile terminal to perform address management for each of the home agents managing addresses.

Further, in addition to the above configuration, the mobile terminal of the present invention may be such that the information on the address handling method includes information for identifying an address used by the mobility management protocol as a home address.
This configuration enables the mobile terminal to identify the address used by the mobility management protocol as the home address before executing the mobility management protocol.

Further, in addition to the above configuration, the mobile terminal of the present invention may be such that the mobility management protocol executing unit searches for a home agent and performs a binding update on the address used by the mobility management protocol as the home address upon running the mobility management protocol.
This configuration enables the mobile terminal to grasp the address used as the home address at once upon running the mobility management protocol and hence to search for a home agent and perform a binding update on the address.

Further, in addition to the above configuration, the mobile terminal of the present invention may be such that the information on the address handling method includes identification information on a home agent corresponding to the address used by the mobility management protocol as the home address.
This configuration enables the mobile terminal to perform home agent search processing on the address used by the mobility management protocol as the home address before executing the mobility management protocol to grasp a corresponding home agent.

Further, in addition to the above configuration, the mobile terminal of the present invention may be such that the mobility management protocol executing unit performs a binding update on the address used by the mobility management protocol as the home address upon running the mobility management protocol.
This configuration enables the mobile terminal to grasp the address used as the home address and the home agent corresponding to the address at once upon running the mobility management protocol and hence to perform a binding update on the address.

Further, in addition to the above configuration, the mobile terminal of the present invention may be such that the inquiry unit makes an inquiry when the mobile terminal is attached to a domain before running the mobility management protocol. This configuration enables the mobile terminal to acquire information necessary upon running the mobility management protocol at the time of being attached to the domain (e.g. its own home domain) before running the mobility management protocol.

Further, in addition to the above configuration, the mobile terminal of the present invention may be such that the inquiry unit makes an inquiry about an address handling method for a new address when the mobile terminal acquires the new address.
This configuration enables the mobile terminal to grasp the method of handling an address in the mobility management protocol at the time of newly acquire the address.

Further, in addition to the above configuration, the mobile terminal of the present invention may be such that the mobility management protocol executing unit refers to the information on the address handling method stored in the address handling method storing unit when the mobile terminal changes a domain to which the mobile terminal is attached and runs the mobility management protocol.
This configuration enables the mobile terminal to start communication by the mobility management protocol quickly when the mobile terminal changes the domain to which it is attached and runs mobility management protocol.

Further, in addition to the above configuration, the mobile terminal of the present invention may be such that the information on the address handling method includes information indicating to which category the address belongs: an address to be used by the mobility management protocol as a home address, an address available to the mobility management protocol as the home address, an address to be used by the mobility management protocol as a care-of address, an address available to the mobility management protocol as the care-of address, an address unavailable to the mobility management protocol or an address unknown as to whether the address is available to the mobility management protocol or not.
This configuration enables the mobile terminal to handle the address by the processing method suited to each category to which the address is belongs.

Further, in addition to the above configuration, the mobile terminal of the present invention may further comprise home address requesting unit configured to request an address to be used as the home address or an address available as the home address when it is found from the inquiry result of the inquiry unit that there is no address available as the home address in addresses managed by the address management unit.
This configuration enables the mobile terminal to acquire the address used by the mobility management protocol as the home address before running the mobility management protocol.

Further, in addition to the above configuration, the mobile terminal of the present invention may be such that the information on the address handling method includes information indicating whether an address should be used as the home address or is available as the home address.
This configuration enables the mobile terminal to distinguish between a "HoA specified" address to be used as the home address and a "HoA possible" address available as the home address.

Further, in addition to the above configuration, the mobile terminal of the present invention may be such that the information on the address handling method includes, together with the address available as the home address, information indicative of a use application available for other than the home address.
According to this configuration, as for the "HoA possible" address available as the home address, an application other than the home address can be grasped.

Further, in addition to the above configuration, the mobile terminal of the present invention may be such that when an address to be used as the home address and an address available as the home address are managed by the same home agent, a binding update with respect to the address to be used as the home address is sent to the home agent, so that binding update processing for the address available as the home address is performed by the home agent, thereby enabling the address available as the home address to be used as the home address.
According to this configuration, when the address available as the home address is managed by the same home agent as the address to be used as the home address, the registration content related to the address to be used as the home address can be copied and incorporated into the address available as the home address.

Further, in addition to the above configuration, the mobile terminal of the present invention may be such that the information on the address handling method includes information for identifying an address used by the mobility management protocol as a care-of address.
This configuration enables the mobile terminal to identify the address used by the mobility management protocol as the care-of address before executing the mobility management protocol.

Further, in addition to the above configuration, the mobile terminal of the present invention may be such that the mobility management protocol executing unit performs, upon running the mobility management protocol, a binding update on the address used by the mobility management protocol as the care-of address in association with the home address.
This configuration enables the mobile terminal to perform a binding update using the address the use of which as the care-of address is identified before starting the mobility management protocol.

Further, in addition to the above configuration, the mobile terminal of the present invention may be such that an identifier is inserted into the binding update, the identifier indicating that the care-of address of the binding update is notified as an address used as the care-of address.
According to this configuration, when the address identified as a care-of address is used as the care-of address before the start of running the mobility management protocol, it is explicitly specified.

Further, in addition to the above configuration, the mobile terminal of the present invention may be such that upon communication using, as a forwarding destination, a normal care-of address acquired from a destination where a domain to which the mobile terminal was attached has been changed, communication using the care-of address registered by the binding update is continued.
According to this configuration, for example, communication using the care-of address registered by the binding update is continued during the communication (tunnel/routing) using the normal care-of address.

Further, in addition to the above configuration, the mobile terminal of the present invention may be such that the care-of address registered by the binding update is notified to a correspondent terminal to perform communication without informing the correspondent terminal of a normal care-of address acquired from a destination where a domain to which the mobile terminal was attached has been changed.
According to this configuration, even when the mobile terminal moves and changes the domain to which is attached, the mobile terminal can conceal its moving from the correspondent terminal.

Further, in addition to the above configuration, the mobile terminal of the present invention may be such that the information on the address handling method includes information for identifying an address unavailable to the mobility management protocol but maintainable.
This configuration enables the mobile terminal to identify the address unavailable to the mobility management protocol but desired to be maintained without being discarded.

Further, in addition to the above configuration, the mobile terminal of the present invention may be such that the address management unit maintains the maintainable address when the mobile terminal changes a domain to which the mobile terminal is attached and runs the mobility management protocol.
This configuration enables the mobile terminal to maintain the address unavailable to the mobility management protocol but desired to be maintained without being discarded.

Further, in addition to the above configuration, the mobile terminal of the present invention may be such that the maintainable address is reused when the mobile terminal changes the domain to which the mobile terminal is attached and attaches again to a domain in which the maintained maintainable address was used.
This configuration enables the mobile terminal to reuse the address unavailable to the mobility management protocol but maintained, so that processing such as address authentication, assignment and registration can be omitted, thereby enabling reduction in time required to start communication.

Further, in addition to the above configuration, the mobile terminal of the present invention may be such that when the mobile terminal changes the domain to which the mobile terminal is attached and attaches again to a domain in which the maintained maintainable address was used, it is checked again whether the maintainable address is usable, and according to the checking result, the maintainable address is reused or the maintainable address is discarded.
This configuration enables the mobile terminal to check whether the address unavailable to the mobility management protocol but maintained is reusable or not.

Further, in addition to the above configuration, the mobile terminal of the present invention may be such that the information on the address handling method includes information for identifying an address used in a CS system or an address used in a PS system.
This configuration enables the mobile terminal to identify the address used in the CS system or the address used in the PS system.

In order to attain the above object, the network node of the present invention is a network node located on a network, comprising:
inquiry receiving unit configured to receive an inquiry about an address handling method from a mobile terminal that implements a mobility management protocol for performing mobility management before the mobile terminal runs the mobility management protocol, wherein the address handling method indicates how the mobility management protocol is to handle an address maintained upon communication using the mobility management protocol; and
inquiry/response unit configured to notify the mobile terminal of information on the address handling method as a response to the inquiry from the mobile terminal.
This configuration enables the mobile terminal to complete the start of the mobility management protocol (various settings up to the start of communication) quickly when the mobile terminal uses the mobility management protocol to perform its mobility management.

In addition to the above configuration, the network node of the present invention may also such that the mobile terminal identifies an address used as a home address, and information for identifying the address used as the home address is notified to the mobile terminal as the information on the address handling method.
This configuration enables the mobile terminal to identify the address used by the mobility management protocol as the home address before executing the mobility management protocol.

Further, in addition to the above configuration, the network node of the present invention may be such that among addresses of the mobile terminal, an address to be used as the home address and an address available as the home address are identified, and when a forwarding destination of packets destined to the address to be used as the home address is registered, the same forwarding destination of packets is also registered for the address available as the home address.
According to this configuration, when the address available as the home address is managed by the same home agent as the address to be used as the home address, the registration content related to the address to be used as the home address can be copied and incorporated into the address available as the home address.

Further, in addition to the above configuration, the network node of the present invention may be such that the mobile terminal identifies an address used as a care-of address, and information for identifying the address used as the care-of address is notified to the mobile terminal as the information on the address handling method.
This configuration enables the mobile terminal to identify the address used by the mobility management protocol as the care-of address before executing the mobility management protocol.

Further, in addition to the above configuration, the network node of the present invention may be such that among addresses of the mobile terminal, an address to be used as the care-of address and an address available as the care-of address are identified, and when the care-of address is registered as a forwarding destination in association with a specific home address, the address available as the care-of address is also registered as a forwarding destination associated with the same specific home address.
According to this configuration, when the address available as the care-of address is managed by the same home agent as the address to be used as the care-of address, the registration content related to the address to be used as the care-of address can be copied and incorporated into the address available as the care-of address.

Further, in addition to the above configuration, the network node of the present invention may be such that an address unavailable as the home address or the care-of address to the mobility management protocol of the mobile terminal but maintainable is identified, and information for identifying the address unavailable but maintainable is notified to the mobile terminal as the information on the address handling method.
This configuration enables the mobile terminal to identify the address unavailable to the mobility management protocol but maintainable before executing the mobility management protocol.

Further, in addition to the above configuration, the network node of the present invention may be such that an address unavailable as the home address or the care-of address to the mobility management protocol of the mobile terminal and to be discarded is identified, and information for identifying the address unavailable and to be discarded is notified to the mobile terminal as the information on the address handling method.
This configuration enables the mobile terminal to identify the address unavailable to the mobility management protocol and incapable of being maintained before executing the mobility management protocol.

Further, in addition to the above configuration, the network node of the present invention may be such that an address used by the mobile terminal in a CS system or an address used by the mobile terminal in a PS system is identified, and information for identifying the address used in the CS system or the address used in the PS system is notified to the mobile terminal as the information on the address handling method.
This configuration enables the mobile terminal to identify the address used in the CS system or the address used in the PS system.

The present invention has such a configuration as mentioned above to enable a mobile terminal to grasp an address handling method for use in each service, having the advantage of achieving more efficient communication. Particularly, the present invention has the advantage of enabling the mobile terminal to complete the start of a mobility management protocol (various settings up to the start of communication) quickly when the mobile terminal uses the mobility management protocol to perform its mobility management. Further, the present invention has the advantage of completing communication settings quickly, particularly when the communication is performed using a network system in which a PS domain and a CS domain are mixed.

### BRIEF DESCRIPTION OF THE DRAWINGS

[FIG. 1] It is a diagram showing an example of the configuration of a network system according to an embodiment of the present invention.
[FIG. 2] It is a flowchart showing an example of operation when a mobile terminal moves in the embodiment of the present invention.
[FIG. 3] It is a block diagram schematically showing the functions of the mobile terminal in the embodiment of the present invention.
[FIG. 4] It shows an example of a table storing information indicative of methods of handling plural addresses maintained in a state where the mobile terminal is attached to a home PMIPv6 domain in the embodiment of the present invention.
[FIG. 5] It is a diagram showing an example of a conventional network system.
[FIG. 6] It is a block diagram schematically showing the functions of a LMA/HA in the embodiment of the present invention.
[FIG. 7] It is a diagram showing another example of the configuration of the network system according to the embodiment of the present invention.
[FIG. 8A] It is a diagram showing an example of a table storing information indicative of a handling method related to an address for CS system in the embodiment of the present invention.
[FIG. 8B] It is a diagram showing an example of a table storing information indicative of a handling method related to another address for CS system in the embodiment of the present invention.

### BEST MODE FOR CARRYING OUT THE INVENTION

An embodiment of the present invention will now be described with reference to the accompanying drawings.

First, the configuration of a network system in the embodiment of the present invention will be described. FIG. 1 is a diagram showing an example of the configuration of a network system according to the embodiment of the present invention.

In the network system shown in FIG. 1, a PMIPv6 domain (hereinafter referred to as "home PMIPv6 domain") 10 as the home domain of a mobile terminal (UE) 15 and a foreign network (network different from the home PMIPv6 domain) 20 are connected through any network (e.g., the Internet 30).

The PMIPv6 domain 10 manages a MAG 11 functioning as an access point of the UE 15 and position information on the UE 15 or the MAG 11 attached to the PMIPv6 domain 10, and has a LMA/HA 12 functioning as a HA of the UE 15 running MIPv6. The foreign network 20 has an AR 21 functioning as an access point of the UE 15.

Here, it is considered a case where the UE 15 changes the attachment from the home PMIPv6 domain 10 to the foreign network 20 in a state of being connected to the MAG 11 in the home PMIPv6 domain 10 (i.e., the state before moving) to transit to a state of being connected to the AR 21 in the foreign network 20 (i.e., the state after moving). In addition, it is assumed that in the state before moving, the UE 15 has gotten services from various networks 20 through the home PMIPv6 domain 10 and already acquired an address for receiving each service. Examples of the networks 20 include a VoIP network providing VoIP service and a cellular network providing data communication service using cellular phones.

In the present invention, the UE 15 is configured such that, in the state of being attached to the home PMIPv6 domain 10, the UE 15 grasps in advance an address to be used as a HoA upon running MIPv6 (see the arrow (message flow 50) in FIG. 1), and when actually running MIPv6, the UE 15 uses information grasped as mentioned above to configure further settings (e.g., HA search processing and BU transmission processing) (see the arrow (message flow 60) in FIG. 1) so that MIPv6 communication can be started quickly.

Here, various kinds of addresses the UE 15 can maintain will be described.

The UE 15 acquires an address assigned from the home PMIPv6 domain 10 in the state of being attached to home PMIPv6 domain 10. It is not always true that this address can be used as HoA, though often available as the HoA even after the UE 15 has moved to the foreign network 20. For example, even if the address assigned from this home PMIPv6 domain 10 is globally reachable, the operator may not want this address to be used externally. In such a case, there is a possibility that use of this address for communication with general nodes (out of the network managed by the operator) may be prohibited or the access to packets may be blocked by a gateway device or the like.

In addition, the UE 15 gets services from various networks 20 (e.g., service network A and service network B in FIG. 1) and acquires addresses valid in the service networks or addresses used to get the services. The addresses valid in the service networks are addresses in address systems unique to the various networks (subnetwork, overlay network, etc.) constructing the home PMIPv6 domain 10 and used to access (or to be accessed by) the respective networks (and nodes in the networks). Further, the addresses used to get services are addresses in address systems unique to various services available in the home PMIPv6 domain 10 (local web service, VoIP, video streaming, videoconference, short message, etc.) and used to access (or to be accessed by) the respective services (and other nodes using the services).

On the other hand, when running MIPv6, the UE 15 performs a BU to the HA to associate the HoA (address presentable to common correspondents) as a globally valid address (which may be called an identifier in other protocols) with a CoA (which may be called a locator in other protocols) as an address assigned in a destination network. If there are two or more HAs, an address as the HoA for one HA could be a CoA for the other HA.

Even if the address is an address assigned from the home PMIPv6 domain (address assigned by the home operator), it is not always true that the address meets the requirements for MIPv6 HoA. When the UE 15 starts using MIPv6, it may also be considered that the network side assigns a different address separately from the address of the home PMIPv6 domain 10 assigned by then.

In addition, the setting for determining whether the above address assigned from the home PMIPv6 domain 10, the address valid in a service network or the address used to get service corresponds to either of the HoA and the CoA (or both) or none of them varies depending on the conditions resulting from the use of MIPv6 or setting conditions (policy) on the network side.

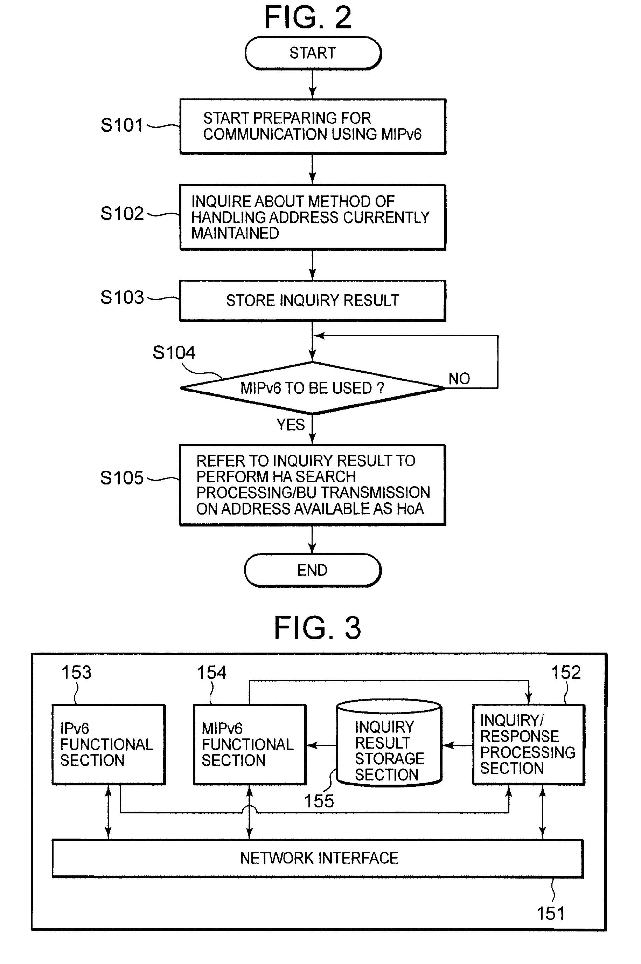

Referring to a flowchart shown in FIG. 2 in addition to the network configuration and message flow in FIG. 1, the following description will be made with respect to the case where the UE 15 moves and changes the connection from the home PMIPv6 domain 10 to the foreign network 20. FIG. 2 is a flowchart showing an example of operation when the UE 15 moves in the embodiment of the present invention.

The UE 15 starts preparing for communication using MIPv6 at any timing in the state of being attached to the home PMIPv6 domain 10 (step S101). The timing of starting preparation for communication using MIPv6 may any time as long as the UE 15 is attached to the home PMIPv6 domain 10. For example, it may be the timing immediately before using MIPv6, such as when the UE 15 performs handover to another network (foreign network 20) to perform communication using MIPv6 or when it is about to run MIPv6 to perform communication with local breakout using another domain address, or the time of less communication traffic or processing load (idle time).

The UE 15 deciding in step S101 to start preparation for moving to the foreign network inquires the home PMIPv6 domain 10 about a method of handling the address currently maintained (step S102). This inquiry destination may be any communication node. For example, when the UE 15 inquires the MAG 11, and the MAG 11 is aware of the address handling method, the MAG 11 sends a response to the UE 15, while when MAG 15 is not aware of the address handling method, the MAG 11 may further inquire the LMA/HA 12 or an authentication server (Authentication, Authorization and Accounting (AAA) server), not shown.

When the UE 15 is aware of the addresses of the LMA/HA 12 and the AAA server, the UE 15 may directly inquire these nodes about the address handling method. Further, if the UE 15 is aware of each of communication nodes, which manage each address currently maintained, respectively, the UE 15 may inquire each communication node managing each address about the address handling method. In addition, when two or more LMA/HAs 12 exist in the home PMIPv6 domain and two or more addresses the UE 15 has are managed by different LMA/HAs 12, the UE 15 may inquire each corresponding LMA/HA 12 (LMA/HA 12 managing each address) about each address handling method, and collectively manage and store the inquiry results for each LMA/HA 12. Further, if a mobile terminal newly acquires an address, it may inquire about the address handling method.

Then, the UE 15 receives, from the home PMIPv6 domain 10, a response (inquiry result) to the inquiry about the method of handling the address currently maintained, and stores this inquiry result (step S103). For example, according to this inquiry result, an address available as the HoA among addresses currently maintained in the UE 15 can be identified. If it is found from this inquiry result that there is no address available as the HoA among the addresses currently maintained in the UE 15, the UE 15 may request an address available as the HoA (or address to be used as the HoA) from the home PMIPv6 domain 10, or request an address available as the HoA (or address to be used as the HoA) immediately after starting MIPv6 (processing step S104). Further, the user may ask for use of MIPv6 at the time of contract of network connection service to make sure that the UE 15 gets an address available as the HoA (or address to be used as the HoA).

The above-mentioned processing of steps S101 to S103 enables the UE 15 to grasp the method of handling the addresses maintained by itself, especially the address available as the HoA (or address to be used as the HoA). Here, the UE 15 inquires about methods of handling two or more acquired addresses, but the UE 15 may also have the method of handling each address notified at the same time when acquiring each address.

The inquiry result (each address handling method) stored in step S103 is maintained in such a state that the MIPv6 function can refer thereto, so that the MIPv6 function refers to this address handling method to select an address, enabling appropriate use of the address as HoA or CoA.

In other words, for example, when some kind of event (e.g., handover from the home PMIPv6 domain 10 to the foreign network 20) occurs and the UE 15 is to use MIPv6 (step S104), the UE 15 starts the MIPv6 function. The MIPv6 function of the UE 15 refers to the inquiry result stored in step S103 and performs HA search processing and BU transmission on the address available as the HoA (step S105).

Through the above-mentioned processing steps S101 to S105, the UE 15 performs HA search processing on only the address available as the HoA and sends a BU to only the address available as the HoA in order to use MIPv6 upon occurrence of any event such as when the UE 15 moves from the PMIPv6 domain to the foreign network, thereby enabling quick completion of starting MIPv6 (various settings up to the start of communication) and reduction in network traffic and processing load.

Here, the description is made with respect to the case where the UE 15 performs the above-mentioned processing mainly for the purpose of grasping the address available as the HoA, but it is also possible to classify the addresses into several kinds, such as an address available as the HoA, an address available as a CoA and unavailable addresses, so that the UE 15 can grasp to which category each address belongs. Detailed examples of classification of addresses and their handling methods will be described later with reference to FIG. 4.

Further, before using MIPv6 (start of MIPv6), the UE 15 can grasp the method of handling each address currently maintained, but the UE 15 may further extract an address available as the HoA from the inquiry result to perform HA search processing on this address available as the HoA in order to identify a HA managing the address available as the HoA. In this case, the UE 15 stores this HA identification result together with the above-mentioned inquiry result so that the UE 15 can grasp an appropriate HoA and a corresponding HA at once upon using MIPv6. Further, as a result of grasping the address handling method, the UE 15 can also perform any other executable process.

Next, the functions of the UE 15 in the embodiment of the present invention will be described. FIG. 3 is a functional block diagram showing an example of the configuration of the UE 15 in the embodiment of the present invention.

The UE 15 shown in FIG. 3 has a network interface 151, an inquiry/response processing section 152, an IPv6 functional section 153, an MIPv6 functional section 154 and an inquiry result storage section 155. FIG. 3 schematically represents the functions of the UE 15 in FIG. 1, and the UE 15 shown in FIG. 3 performs processing according to the flowchart shown in FIG. 2.

The network interface 151 is an interface for connection to an access point toward the MAG 11 or AR 12, or any other network to perform communication. The UE 15 is movable, and the network interface 151 is a radio communication interface. The number of network interfaces 151 may be one or plural.

The inquiry/response processing section 152 has the function of inquiring the home PMIPv6 domain 10 about the method of handling the address currently maintained by the UE 15 when the UE 15 decides to start MIPv6, for example. On this occasion, for example, addresses managed by the IPv6 functional section 153 (addresses used in a state where the UE 15 is attached to the home PMIPv6 domain 10) are acquired to inquire about methods of handling these addresses. The UE 15 can decide to start MIPv6 in any function (any entity) as long as a trigger to give notice of the decision is supplied to the inquiry/response processing section 152.

The inquiry/response processing section 152 has the function of storing an inquiry result in the inquiry result storage section 155 upon receiving, from the home PMIPv6 domain 10, this inquiry result (each address handling method) as a response to the inquiry.

The IPv6 functional section 153 represents an IPv6 function, and the MIPv6 functional section 154 represents an MIPv6 function. Note that although IPv6 and MIPv6 have partially overlapped functions, the functions are schematically represented here as independent blocks, respectively. The IPv6 functional section 153 manages addresses used in the state where the UE 15 is attached to the home PMIPv6 domain 10, and the MIPv6 functional section 154 manages addresses used in MIPv6 using a binding update list or the like.

The MIPv6 functional section 154 has the function of referring to inquiry results (address handling methods currently maintained by the UE 15) stored in the inquiry result storage section 155 to perform HA search processing and BU transmission processing appropriately according to the information. Specifically, the MIPv6 functional section 154 performs HA search processing and BU transmission processing on only the address available as the HoA, for example, enabling efficient HA search processing and BU transmission processing by avoiding unnecessary HA search processing and BU transmission processing for useless addresses.

The inquiry result storage section 155 has the function of storing inquiry results received by the inquiry/response processing section 152. The MIPv6 functional section 154 can refer to the inquiry results stored in the inquiry result storage section 155.

The UE 15 inquires about the method of handling each address to acquire information (inquiry result) indicating how to handle each address so that the information can be stored in the inquiry result storage section 155. On this occasion, the acquired inquiry result can be stored in the inquiry result storage section 155 in the form of a table as shown in FIG. 4, for example. Note that the determination on how to handle each address is made on the side of the home PMIPv6 domain 10, and the UE 15 receives and stores the determination result as the inquiry result.

FIG. 4 shows an example of a table storing information indicative of methods of handling two or more addresses (addresses A-H) maintained in the state where the UE 15 is attached to the home PMIPv6 domain 10 in the embodiment of the present invention. Note that the table shown in FIG. 4 shows a state after the UE 15 changes the access point to the foreign network 20 and address I and address J are addresses acquired from the foreign network 20. Therefore, at the stage of being attached to the home PMIPv6 domain 10 before changing the access point to the foreign network 20, methods of handling the addresses A-H are stored in the inquiry result storage section 155 of the UE 15.

As shown in FIG. 4, the table stored in the inquiry result storage section 155 lists, for the address (addresses A-H) maintained by the UE 15, the source of each address (information indicating from which network the address has been acquired) and information indicative of whether MIPv6 can be used as HoA or CoA.

Here, a description will be made about information indicative of whether each address of MIPv6 shown in FIG. 4 can be used as HoA or CoA. FIG. 4 indicates whether MIPv6 can use each address as HoA or CoA in several categories. In other words, FIG. 4 indicates whether MIPv6 can use each address as HoA or CoA by classifying it into any one of the following categories: "HoA specified," "HoA possible," "CoA specified," "CoA possible," "unknown," "unavailable/maintainable" and "unavailable/discarded."

Each category used in the embodiment of the present invention will be described below.

"HoA specified" denotes that the address is globally reachable and suitable for use as the HoA in MIPv6 or the address is specified to be used as the HoA. "HoA specified" may also be used for an address specified to be used as the HoA from the side of the home PMIPv6 domain 10.

The UE 15 can communicate with general Correspondent Nodes (CNs) using this "HoA specified" address, and after moving to the foreign network 20, the UE 15 searches for a HA corresponding to this address and associates a CoA with this address so that it can perform a BU to the HA.

This "HoA specified" address is set as the HoA to allow the UE 15 not to handle the other addresses as the HoA from the beginning, thereby enabling reduction in the processing load and the number of messages (network traffic) required to perform HA search processing and BU transmission processing, compared to the case where the HA search processing and BU transmission processing are performed on all the addresses.

The table of FIG. 4 shows that address A as address (1) of the home PMIPv6 domain is the "HoA specified" address.

"HoA possible" denotes an address available as the HoA and globally reachable, though it has a lower priority than the "HoA specified." The "HoA possible" address is an address determined on the side of the home PMIPv6 domain 10 that there is particularly no problem even if this address is made available to external CNs. Upon attaching to the foreign network 20, if the UE 15 desires to choose addresses on a service-by-service basis, an address to be used can be selected from the "HoA possible" addresses.

Further, a handling method in a case where the "HoA possible" address is not used as the HoA may be acquired from the home PMIPv6 domain 10 and stored in the inquiry result storage section 155. In other words, when this address is not to be used as the HoA, the UE 15 may acquire information as to whether to be available as a CoA or not, or whether it is maintainable without change, or should be discarded, for example, and store the information in the inquiry result storage section 155. Further, a category "HoA possible or CoA possible" may be so provided that "HoA possible" will denote an address available as the HoA but not as a CoA.

Particularly, since the binding of "HoA possible" addresses managed by the same HA as the HA managing the "HoA specified" address can be taken care of on the network side, the UE 15 can be configured to eliminate the need to send a BU for any "HoA possible" address. For example, even if receiving no BU for this "HoA possible" address, the LMA/HA 12 properly processes the content of BU registration sent to the "HoA specified" address (avoidance of redundant registration, avoidance of loop registration, etc.), and copies it to an address entry of the "HoA possible" address (or defines it under an alias), making it possible to create a registration entry of the "HoA possible" address. Then, when the HA receives a packet sent to this "HoA possible" address or the terminal sends a packet using the "HoA possible" address as the source address, the HA performs processing according to the registration entry of the "HoA possible" address. Thus, the UE 15 can reduce transmission of the BU for the "HoA specified" address and communicate with external nodes using this "HoA specified" address.

The table of FIG. 4 shows that address E as address (2) of the home PMIPv6 domain is the "HoA possible" address.

"CoA possible" denotes that the address has only to be used as a CoA because it is not worth being set as the HoA. This "CoA possible" address is available as a CoA and use of it as the HoA is implicitly prohibited. Therefore, the home PMIPv6 domain 10 classifies this address as the "CoA possible" address to disable the UE 15 to use it as the HoA so that unnecessary registration (redundant registration or registration that produce a loop) during efficient registration processing performed by the same HA or the like can be explicitly reduced.

Such an address that does not meet the requirements for the HoA (e.g., globally reachable, presence of a HA managing the address) (or does not permit such a service) but is available when continuously using a specific service upon or after moving to a specific domain may also be set as the "CoA possible" address.

Further, such an address that is not valid on-link (for direct use at an access point) in the foreign network 20 as the destination but may be available through an appropriate tunnel interface may be set as the "CoA possible" address. In this case, "CoA possible" addresses include addresses connectable to a network valid through a tunnel.

It is desired that registration as a CoA in this case should be distinguished from a case where an address given at a destination such as the case of a normal binding update is registered as a CoA. In other words, when the "CoA possible" address is listed for BU transmission, any identifier (e.g., additional flag) is used to give notice that the address is not an address given at the destination but an address given before moving and classified as "CoA possible." This enables the address to be used in a way different from the address given at the destination. For example, as mentioned above, when the specific service used in the network before moving is to be used continuously, data packets for the specific service are sent and received by internally using the "CoA possible" address through tunnel/routing externally using the address given at the destination (normal CoA), enabling continuous use of the service. At this time, the hierarchical relationship of tunneling including whether a tunnel between the HoA and the "CoA possible" exists can be continued intact or it may be changed to a new tunnel configuration.

In particular, when the "HoA specified" address or the "HoA possible" address is managed by the same HA as the HA for the "CoA possible" address, the registration content related to the "HoA specified" address or the "HoA possible" address is copied to an address entry of the "CoA possible" address to enable packet communication using the "CoA possible" address as the source address or the destination address. Thus, when such an address entry is copied at the HA, communication using this address is possible even if the address is not valid at the current access point of the UE 15 through any connection, making it possible to represent such an address as the "CoA possible" address. Such usage of the address is considered to be handled as usage different from a CoA (or locator) as the address of the current access point of the UE 15 (i.e., usage different from a normal CoA). In this case, a term or category different from "CoA possible" can be used to distinguish therebetween. When a copy of the address entry was made, it is desired that the HA or any other node in the network should notify the UE 15 what copy was made. The UE 15 can also request the HA to copy the address entry of the address that is not valid at the current access point of the UE 15 through any connection to make the address valid and available. This request may be made through a BU, any other message, or a special option in the BU message.

Like the case of the "HoA possible" address, a handling method in a case where the "CoA possible" address is not used as a CoA may be acquired from the home PMIPv6 domain 10, and stored in the inquiry result storage section 155. In other words, when this address is not used as a CoA, the UE 15 may acquire information as to whether it is maintainable without change or should be discarded, for example, and store the information in the inquiry result storage section 155,

Thus, for example, since the "CoA possible" address connectable to the home PMIPv6 domain 10 through a tunnel is an address belonging to the original home PMIPv6 domain 10, correspondents are not informed that the UE 15 moved even if the UE 15 is connected to the destination (foreign network 20). The use of this address can keep the position of the UE 15 secret.

"CoA specified" denotes that the address is suitable for use as a CoA in MIPv6 or the address is specified to be used as the CoA. Basically, it is almost the same as the above-mentioned "CoA possible" but a difference from the "CoA possible" can be provided to manage the address such as in that the "CoA specified" address is not permitted to be used for use other than the CoA.

"Unavailable/maintainable" denotes such an address that cannot be used in the foreign network 20 on the grounds that it is a local address or is unavailable for MIPv6 but that can be used again when returning to the home PMIPv6 domain again. When returning to the home PMIPv6 domain again, the UE 15 can use this maintained address to simplify processing such as for address request and address assignment upon reattachment to the home PMIPv6 domain. When returning to the home PMIPv6 domain again, the UE 15 may check again to see whether the maintainable address is available or not.

As mentioned above, when the "HoA specified" address or the "HoA possible" address is managed by the same HA as the HA for the "CoA possible" address, the category "unavailable/maintainable" may be used to indicate that the UE 15 does not need to do registration (BU transmission) when the HA efficiently copy the address entry of an address managed by the same HA in the same manner as the "HoA specified," "CoA possible," and "CoA specified".

"Unavailable/discarded" denotes such an address that cannot be used in the foreign network 20 and cannot be used even when returning to the home PMIPv6 domain 10 again after leaving the home PMIPv6 domain 10. Even when the UE 15 does not leave the home PMIPv6 domain 10 (e.g., in the case of roaming, local breakout, or simultaneous connection), any address to be discarded upon starting MIPv6 corresponds to this "unavailable/discarded" address.

"Unknown" denotes an address with which the home PMIPv6 domain 10 has no concern and remains unknown as to how to handle it. Since the home PMIPv6 domain 10 does not know the address handling method and the source of the "unknown" address, it may be an address provided by anyone else (any other network), and it may also be an address functioning as the HoA in the foreign network 20.

Since the method of handing the "unknown" address is left to the determination by the UE 15, the UE 15 can inquire any other network about the handling method or decide on the handling method by itself (e.g., use as a CoA).

If receiving incoming communication from a CS service even when using a PS service, the UE 15 takes this switching as a kind of handover to another network in the embodiment of the present invention, though the switching from the PS service to the CS service is done on the network side, enabling the UE 15 to grasp this switching.

In this case, an address indicative of being connectable to the CS service is provided separately on the network side upon assignment of an address in the PMIPv6 domain (or for the address already assigned), or at the timing of switching to the CS service, and information on the usage of the address is notified from the network side to the UE 15. The usage of this address may be notified in such a manner that the network side responds to a request from the UE 15, or it may be notified from the network side without any request from the UE 15.

For example, identification information indicative of whether a specific address is "for CS system" or "for PS system" is added as the usage of the address. The UE 15 stores the usage of this address as information indicative of the method of handling the address in association with the address. Since the usage is set as a "maintainable" address in the home domain and the identification information indicative of "for CS system" or "for PS system" is further added, this "maintainable" address may be reserved at the time of use of PS system/CS system.

In this case, since any change in the network to which the UE 15 is attached is not made from the home domain in most settings, the home domain has only to give notice of information for making the UE 15 be able to grasping a change corresponding to flow information indicative of which data is delivered to which address, as well as associating the address of the CS service with the address of the PS service, so that the switching between CS/PS can be done in such a way that the UE 15 can grasp it.

This can not only make it easy for the UE 15 to grasp the address used for the connection to the CS system upon starting the connection to the CS system, but also enables the UE 15 to maintain the address in the PS system. As a result, the processing delay upon switching to the CS system or returning to the PS system is reduced, and the requirements for simultaneous use of the CS system and the PS system are provided by using different addresses in parallel.

Thus, the UE 15 selectively uses both the address for the CS system and the address for the PS system. When either one of the systems goes disabled, the address of the disabled system is set to "unavailable/maintainable" or "unavailable/discarded (return to the network side)" so that the UE 15 can easily select the system used and the address used. This is useful to enable not only the instruction from the network side, but also the selection from the terminal side.

Referring next to an example of a specific network system, a case where the identification information indicative of "for CS system" or "for PS system" is stored in a user terminal will be described.

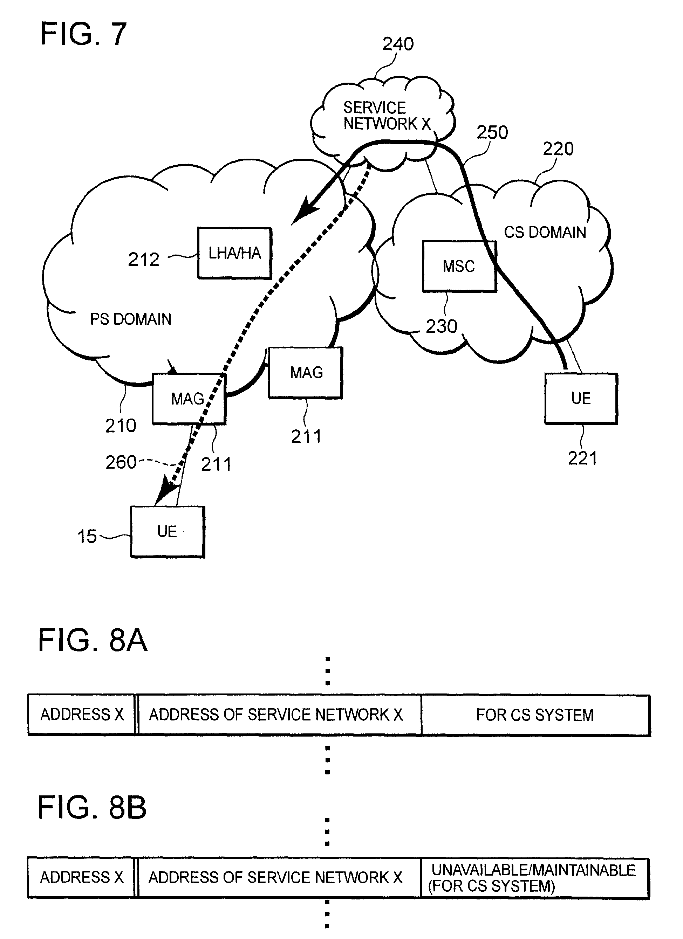

In a network system shown in FIG. 7, a PS domain (e.g., 3GPP domain) 210 as the home domain of a mobile terminal (UE) 15 and a CS domain (e.g., 2G domain) 220 are connected through a service network X240. The service network X240 is a network for providing a translation function (conversion function) between PS service/CS service.

The PS domain 210 manages MAGs 211 functioning as access points of the UE 15 and position information on the UE 15 attached to the PS domain and the MAGs 211, and has a LMA/HA212 functioning as a HA of the UE 15 running MIPv6. The CS domain 220 has an MSC (Mobile Switching Center) 230 for connecting phone terminals for verbal communication and a base station (not shown) to which a UE 221 is connected. It is assumed that the UE 15 is connected to one of the MAGs 211 in the PS domain 210 to perform packet communication, and the UE 221 is attached to the CS domain 220, attempting to start a phone call to the UE 15.

Here, it is assumed that the UE 221 has originated a call to start the call to the UE 15. In this case, for example, the service network X240 performs translation processing for switching the call originated by the UE 221 from the CS service to a UE service to send the call from the UE 221 to the UE 15 attached to the PS domain 210 (as indicated by arrow 250 in FIG. 7) and assign an address to the UE 15 to place the call to the UE 221 in the CS domain 220 (as indicated by arrow 260 in FIG. 7). Upon assignment of this address, it is notified that the address to be assigned is used for communication with the CS system. The notice of the address assignment and the usage of the address may be given before the call from the CS domain 220.

In this case, as one item of the table in which information indicative of the methods of handling plural addresses (addresses A-H) maintained in the UE 15 as shown in FIG. 4 is stored, an address (address X) assigned from the service network X240 is stored as shown in FIG. 8A as information indicative of being "for CS system" used for communication with the CS domain 220. For example, as shown in FIG. 8B, information indicative of "for CS system," i.e., indicative of being used for communication with the CS domain 220 may be stored in addition to "unavailable/maintainable" indicating that it is available only when attached to this PS domain 210 but maintainable.

This enables the UE 15 to easily grasp and switch over to an address suitable for communication with a correspondent attached to the CS domain 220. Even when the address is switched on the network side, the UE 15 can easily grasp the switching (i.e., that handover from the CS system to the PS system is performed on the network side). Further, since only the address used for communication with the CS system is changed, the UE 15 can detect the switching of communication without address acquisition processing using signaling.

Further, suppose that the service network X240 does not provide a detailed translation function. For example, when the UE 15 connects itself to the CS system (at least for a flow of data exchanged with a correspondent) only by switching paths at a router in an access network or a connection domain, it is considered that not only the UE has to perform processing on the data flow such as format conversion of data, but also the address structure itself could be different (e.g., in bit length) between the CS system and the PS system. In this case, the address to be assigned (notified) to the UE 15 is the address of the CS system. However, it is desired that the address of the CS system in this case is equivalent in the address structure to that of the PS system or is easily extendable in terms of the notification mechanism, address management, maintenance mechanism, etc. Therefore, it is desired that the address assigned as for CS system has the same address structure as that for PS system or an extendable address structure so that the address can be generated by a predetermined method (or a method notified on a case-by-case basis) using a bit string constructing the address. For example, when an address having the same structure as the address for PS system is assigned and notified as for CS system, the UE 15 understands that an actual address for CS system becomes a value obtained by extracting a bit string at a specific position of the assigned address and calculating it with the terminal ID of the UE 15. Upon actually connecting to the CS system, the UE 15 performs the format conversion of a data flow sent and received (or performs communication in a communication mode of the CS system) and uses an address for CS system generated from the assigned address (i.e., having the address structure for PS system) as its own address for PS system. Further, the address for PS system may be derived based on a host name obtained by adding a character string (e.g., domain name) to the assigned address for CS system or the result of adding a numerical string (e.g., network prefix value for identifying the PS system) to the assigned address for CS system may be used as the address for PS system. Specifically, a technique such as ENUM (Telephone Number Mapping) can be applied to derive the address for PS system from the address for CS system or the result of adding a network prefix value assigned by the PS system to a telephone number can be used as the address for PS system.

The above description is made about the example in which the present invention is applied to switching from the PS system to the CS system, the present invention can also be applied to switching from the CS system to the PS system in the same manner. Further, it can be applied to continuous switching such as from PS system to CS system and to PS system. In such a case, the advantage of the invention that the UE 15 can grasp that the address can be maintained and selectively used depending on the situation becomes noticeable. Further, the above description is made of switching over between the CS system and the PS system, but the mechanism of the present invention can also be applied to switching over between networks with different address structures, different address assignment policies and different ways of establishing connections. For example, the present invention can be applied to a communication system including a second-generation mobile phone network (2G network), a WiMAX system, a LTE system, and the like.

Further, in the above-mentioned embodiment, the example in which a call originated from the CS domain is received in the PS domain is described, but this is also effective in a case where a call is originated from the PS domain toward the CS domain. For example, when the UE 15 attached to the PS domain originates a call and determines that a correspondent may not be necessarily located in the PS domain, the UE 15 uses the address of the CS system to originate the call using the address for CS system in advance (or at the time of calling). Since the CS system is normally in a state of always-on connection to the UE, the correspondent is called more reliably (more quickly).

The above-mentioned classification defining the method of handling each address is just an example, and various categories suited to actual network operations can be used in the present invention. Further, for example, the above-mentioned method of handling each address can be represented as a predetermined bit array indicating each of the categories. When the method of handling each address is notified from the home PMIPv6 domain 10 to the UE 15, and when the method of handling each address is stored in the table in the inquiry result storage section 155 of the UE 15, these bit arrays can be used.

In addition, different handling methods for respective domains may be indicated in each address. For example, if an address is registered with a HA in the home PMIPv6 domain 10 (or a domain from which the UE 15 is instructed on the handling method), the address can be handled as the "HoA specified" address, while if it is registered with a HA in any other domain, the UE 15 may be instructed to handle the address as the "CoA possible" address, or if it is to be registered with a HA in a specific domain, the UE 15 may be instructed to handle the address as the "unavailable/maintainable."

Further, when performing two or more BUs to the same HA, the UE 15 can combine the two or more BUs into one BU (e.g., BU for associating two or more HoAs with one or plural CoAs) and send the BU. In addition, the UE 15 may acquire the address of a HA as an address capable of being handled as the HoA together with the method of handling the address, or perform processing for searching a HA having an address capable of being handled as the HoA immediately after the UE 15 grasp the method of handling the address, to grasp the HoA and the corresponding HA before starting MIPv6 after moving to the foreign network 20, for example, in order to perform BU transmission processing after starting MIPv6, enabling quick processing through communication using MIPv6.

Further, in the above-mentioned embodiment of the present invention, the description is made with respect to the case where an address (or two or more addresses) is registered through a BU, but this can be applied to a case where a prefix (or two or more prefixes) is registered.

For example, the UE 15 can set a prefix given in the PMIPv6 operation as being intended for registration. In this case, the prefix (HoP: home prefix) is used instead of the HoA in order to obtain association and registration. This has the advantage that the prefix assigned in PMIPv6 can be registered intact as the HoP, or that if two or more addresses are generated from the HoP, the registration of the HoP can result in collectively registering the two or more addresses including the HoP.

A prefix (CoP: care-of prefix) may also be used instead of a CoA in order to obtain association and registration. In this case, a prefix determined in the home domain to be associated with the HoA can be registered intact as the CoP. Similarly, when a prefix is acquired in a foreign domain, the prefix can be registered intact as the CoP. Further, when two or more addresses are generated from the CoP, it has the advantage that the registration of the CoP can result in collectively registering the two or more addresses including the CoP as a result of the registration of the CoP. The CoP can also be registered for the HoP in the same manner.

In addition to the prefix given in PMIPv6, a prefix obtained from a HA used in NEMO can also be registered in the same manner. Further, in NEMO, two or more HoPs can be selectively used for an MR, and the prefix can be used by further dividing it into small subnets. In handling these prefixes, they can be registered as CoPs depending on the application. The notification of this selective use may be made by exchanging information between the MR and the HA as to what registration relationship the MR should have when the MR leaves the home network (or when the prefix is handed over) in the same way as the example mentioned above.

In this specification, the detail description is made about the IPv6 address, but it is considered that in the actual network operation, an IPv4 address system is employed (or IPv4 and IPv6 are mixed). Even in such an environment, the present invention can be applied. Since the size of address space in IPv4 is smaller than that in IPv6, it is more likely that a valid address (local address) is used only in a local domain. Similarly, it is considered that MIPv4 is employed instead of MIPv6 (or MIPv4 and MIPv6 are mixed), but the present invention can be applied even in such an environment.

Further, the UE 15 may perform a bootstrap process (initialization of MIPv6 settings) using an address acquired after moving to the foreign network 20. For example, when the UE 15 was attached to a foreign PMIPv6 domain before moving and has returned to the home PMIPv6 domain, the bootstrap process is prone to occur. Even in such a case, the UE 15 can make an inquiry according to the present invention to a network node in the foreign PMIPv6 domain before moving. At this time, it is desired particularly to inquire about how to handle an address when used as a CoA.

Further, when the UE 15 inquires about each address handling method (and further an address of the HA corresponding to the HoA) before being used in MIPv6 (or when notified from the network side), the UE 15 may, for example, use a message used in AAA or a message used in handover (or fast handover), or a message related to DHCP (Dynamic Host Configuration Protocol) or a RA (Router Advertisement) message.

The UE 15 may also declare use of MIPv6 from the beginning (before using MIPv6) so that the UE 15 can grasp the method of handling an address when getting the address without detecting the timing of its moving.

The UE 15 inquires about an address corresponding to the HoA after starting MIPv6 to perform HA search processing on only the address corresponding to the HoA, and this can reduce the processing load required for the HA search processing and BU transmission processing.

Further, in the above-mentioned embodiment, the domain to which the UE 15 was attached before moving is the home PMIPv6 domain 10, but it may be, for example, a foreign PMIPv6 domain beyond the control of the home operator or any other 3GPP domain, or an access network connected without using MIPv6. Alternatively, the domain to which the UE 15 was attached before moving may be a different access network such as WiMAX or WLAN, a network in which a radio system and a fixed system are integrated by Fixed Mobile Convergence (FMC) or the like, or a network related to a highly controlled network configuration such as Next Generation Network (NGN), and the confidential relationship with these networks may be high or low. Similarly, in the above-mentioned embodiment, the domain to which the UE 15 is attached after moving is the foreign network 20, but this foreign network 20 is, for example, a domain in which the UE 15 starts MIPv6, such as a foreign PMIPv6 domain or a non-3GPP access network (note that the access technique is not limited as long as the UE 15 uses MIPv6 in the domain). Even when the UE 15 starts MIPv6 for the purpose of local breakout or the like while continuing to be attached to the home PMIPv6 domain 10 without moving, the present invention can be applied.

Further, it is considered that the structure of local network domains is wide-ranging including roaming relationships among plural operators. For example, the MAG is described as an access router for mobile nodes, but another configuration may be considered in which the MAG is a border router between different access networks (including roaming) so that a mobile node will be connected to the MAG as the border router through a different access network after once connecting to the access network. Even in this case, it is obvious that the operation of the present invention is applicable in the same manner, though design such as various parameters, a procedure for arriving at the MAG, a communication procedure, etc. are different.

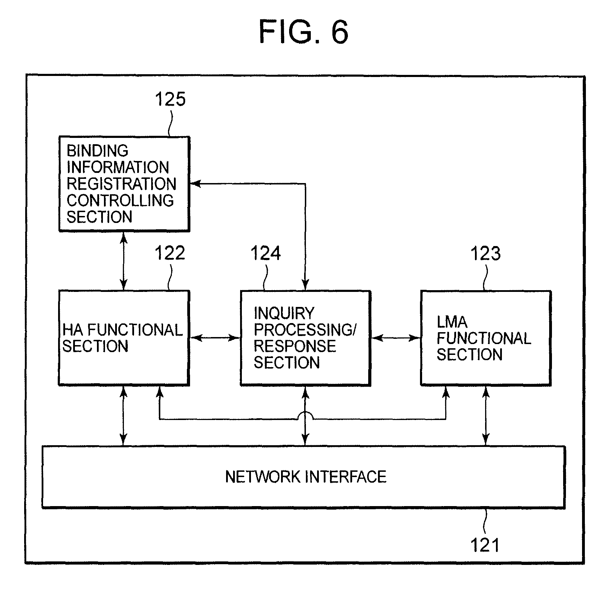

Next, the functions of the LMA/HA 12 in the embodiment of the present invention will be described. FIG. 6 is a functional block diagram showing an example of the configuration of the UE 15 according to the embodiment of the present invention.

The LMA/HA 12 shown in FIG. 6 has a network interface 121, a HA functional section 122, a LMA functional section 123, an inquiry processing/response section 124 and a binding information registration controlling section 125. FIG. 6 schematically represents the functions of the LMA/HA 12 in FIG. 1.

The network interface 121 is an interface for connection to a network to perform communication. The HA functional section 122 denotes that the LMA/HA 12 has a function necessary to work as an address management apparatus (i.e., HA) for a mobility management protocol (e.g., MIPv6) that runs on a terminal basis, and the LMA functional section 123 denotes that the LMA/HA 12 has a function necessary to work as an address management apparatus (i.e., LMA) for a mobility management protocol (e.g., PMIPv6) that runs on a network basis.

The inquiry processing/response section 124 has the functions of processing an inquiry received from the UE 15 via the MAG 11 about the method of handling an address currently maintained by the UE 15, checking over the method of handling the address of the UE 15 (only the address about which the UE 15 has inquired or all the addresses known to be maintained by the UE 15), and giving notice of the checking result as a response to the inquiry from the UE 15 in such a manner that the UE 15 can receive it.

The binding information registration controlling section 125 has the functions of incorporating the registration content of a "HoA specified" address as the registration content of a "HoA possible" address when a binding update for the "HoA specified" address is received in the HA functional section 122, for example, and copying and registering the registration content of the "HoA specified" address for the "HoA possible" address. Similarly, the binding information registration controlling section 125 has the functions of incorporating the registration content of a "CoA specified" address as the registration content of a "CoA possible" address when a binding update for the "CoA specified" address from the UE 15 is received in the HA functional section 122, for example, and copying and registering the registration content of the "CoA specified" address for the "CoA possible" address.

Each of the functional blocks used in describing the aforementioned embodiment of the present invention is implemented as a Large Scale Integration (LSI) typified by an integrated circuit. These may be made up of one chip individually, or they may be made up of one chip to include some or all of them. Here, although the LSI is assumed, it may be called an Integrated Circuit (IC), a system LSI, a super LSI, or an ultra LSI depending on the degree of integration.

Further, the technique for creation of an integrated circuit is not limited to LSI, and it may be implemented by a private circuit or a general-purpose processor. A Field Programmable Gate Array (FPGA) capable of programming after LSI manufacturing or a reconfigurable processor capable of reconfiguring connections or settings of circuit cells within the LSI may also be employed.

In addition, if integrated circuit technology capable of replacing LSI emerges with the development of semiconductor technology or another technology derived therefrom, the technology may, of course, be used to integrate the functional blocks. For example, applications of biotechnology may be possible.

### INDUSTRIAL APPLICABILITY

The present invention enables a mobile terminal to grasp an address handling method used for each service and hence to achieve more efficient communication, and is applicable to communication technology for a packet-switched data communication network, particularly to communication technology when the mobile terminal performs communication using a mobility management protocol such as Mobile Internet Protocol (MIP).

## Claims

1. A mobile terminal to establish a connection to a network in order to perform communication, comprising:
address management unit configured to manage one or plural addresses used to establish a connection to the network to perform communication;
mobility management protocol executing unit configured to allow the mobile terminal to perform mobility management thereof;
inquiry unit configured to, before the mobility management protocol executing unit runs the mobility management protocol, inquire the network side about an address handling method indicating how the mobility management protocol is to handle the address managed by the address management unit upon communication using the mobility management protocol; and
address handling method storing unit configured to acquire information on the address handling method for the address managed by the address management unit in response to the inquiry from the inquiry unit and store the information in such a manner that the mobility management protocol executing unit can refer to the information upon running the mobility management protocol.

2. The mobile terminal according to claim 1, wherein when there are two or more home agents for managing the address, the inquiry unit inquires each of the two or more home agents, respectively, and the address handling method storing unit stores each inquiry result for each home agent.

3. The mobile terminal according to claim 1, wherein the information on the address handling method includes information for identifying an address used by the mobility management protocol as a home address.

4. The mobile terminal according to claim 3, wherein the mobility management protocol executing unit searches for a home agent and performs a binding update with respect to the address used by the mobility management protocol as the home address upon running the mobility management protocol.

5. The mobile terminal according to claim 3, wherein the information on the address handling method includes identification information on a home agent corresponding to the address used by the mobility management protocol as the home address.

6. The mobile terminal according to claim 5, wherein the mobility management protocol executing unit performs a binding update for the address used by the mobility management protocol as the home address upon running the mobility management protocol.

7. The mobile terminal according to claim 1, wherein the inquiry unit makes an inquiry when the mobile terminal is attached to a domain before running the mobility management protocol.

8. The mobile terminal according to claim 1, wherein the inquiry unit makes an inquiry about an address handling method for a new address when the mobile terminal acquires the new address.

9. The mobile terminal according to claim 1, wherein the mobility management protocol executing unit refers to the information on the address handling method stored in the address handling method storing unit when the mobile terminal changes a domain to which the mobile terminal is attached and runs the mobility management protocol.

10. The mobile terminal according to claim 1, wherein the information on the address handling method includes information indicating to which category the address belongs: an address to be used by the mobility management protocol as a home address, an address available to the mobility management protocol as the home address, an address to be used by the mobility management protocol as a care-of address, an address available to the mobility management protocol as the care-of address, an address unavailable to the mobility management protocol or an address unknown as to whether the address is available to the mobility management protocol or not.

11. The mobile terminal according to claim 1, further comprising home address requesting unit configured to request an address to be used as the home address or an address available as the home address when it is found from the inquiry result of the inquiry unit that there is no address available as the home address in addresses managed by the address management unit.

12. The mobile terminal according to claim 3, wherein the information on the address handling method includes information indicating whether an address should be used as the home address or is available as the home address.

13. The mobile terminal according to claim 12, wherein the information on the address handling method includes, together with the address available as the home address, information indicative of a use application available for other than the home address.

14. The mobile terminal according to claim 12, wherein when an address to be used as the home address and an address available as the home address are managed by an identical home agent, a binding update for the address to be used as the home address is sent to the home agent, so that binding update processing for the address available as the home address is performed by the home agent, thereby enabling the address available as the home address to be used as the home address.

15. The mobile terminal according to claim 1, wherein the information on the address handling method includes information for identifying an address used by the mobility management protocol as a care-of address.

16. The mobile terminal according to claim 15, wherein the mobility management protocol executing unit performs a binding update for the address used by the mobility management protocol as the care-of address in association with the home address upon running the mobility management protocol.

17. The mobile terminal according to claim 16, wherein an identifier is inserted into the binding update, the identifier indicating that the care-of address of the binding update is notified as an address used as the care-of address.

18. The mobile terminal according to claim 16, wherein upon communication using, as a forwarding destination, a normal care-of address acquired from a destination where a domain to which the mobile terminal was attached has been changed, communication using the care-of address registered by the binding update is continued.

19. The mobile terminal according to claim 16, wherein the care-of address registered by the binding update is notified to a correspondent terminal to perform communication without informing the correspondent terminal of a normal care-of address acquired from a destination where a domain to which the mobile terminal was attached has been changed.

20. The mobile terminal according to claim 1, wherein the information on the address handling method includes information for identifying an address unavailable to the mobility management protocol but maintainable.

21. The mobile terminal according to claim 20, wherein the address management unit maintains the maintainable address when the mobile terminal changes a domain to which the mobile terminal is attached and runs the mobility management protocol.

22. The mobile terminal according to claim 21, wherein the maintainable address is reused when the mobile terminal changes the domain to which the mobile terminal is attached and attaches again to a domain in which the maintained maintainable address was used.

23. The mobile terminal according to claim 21, wherein when the mobile terminal changes the domain to which the mobile terminal is attached and attaches again to a domain in which the maintained maintainable address was used, it is checked again whether the maintainable address is usable, and according to the checking result, the maintainable address is reused or the maintainable address is discarded.

24. The mobile terminal according to claim 1, wherein the information on the address handling method includes information for identifying an address used in a CS system or an address used in a PS system.

25. A network node located on a network, comprising:
inquiry receiving unit configured to receive an inquiry about an address handling method from a mobile terminal that implements a mobility management protocol for performing mobility management before the mobile terminal runs the mobility management protocol, wherein the address handling method indicates how the mobility management protocol is to handle an address maintained upon communication using the mobility management protocol; and
inquiry/response unit configured to notify the mobile terminal of information on the address handling method as a response to the inquiry from the mobile terminal.

26. The network node according to claim 25, wherein the mobile terminal identifies an address used as a home address, and information for identifying the address used as the home address is notified to the mobile terminal as the information on the address handling method.

27. The network node according to claim 26, wherein among addresses of the mobile terminal, an address to be used as the home address and an address available as the home address are identified, and when a forwarding destination of packets destined to the address to be used as the home address is registered, the same forwarding destination of packets is also registered for the address available as the home address.

28. The network node according to claim 25, wherein the mobile terminal identifies an address used as a care-of address, and information for identifying the address used as the care-of address is notified to the mobile terminal as the information on the address handling method.

29. The network node according to claim 28, wherein among addresses of the mobile terminal, an address to be used as the care-of address and an address available as the care-of address are identified, and when the care-of address is registered as a forwarding destination in association with a specific home address, the address available as the care-of address is also registered as a forwarding destination associated with the same specific home address.

30. The network node according to claim 25, wherein an address unavailable as the home address or the care-of address to the mobility management protocol of the mobile terminal but maintainable is identified, and information for identifying the address unavailable but maintainable is notified to the mobile terminal as the information on the address handling method.

31. The network node according to claim 25, wherein an address unavailable as the home address or the care-of address to the mobility management protocol of the mobile terminal and to be discarded is identified, and information for identifying the address unavailable and to be discarded is notified to the mobile terminal as the information on the address handling method.

32. The network node according to claim 25, wherein an address used by the mobile terminal in a CS system or an address used by the mobile terminal in a PS system is identified, and information for identifying the address used in the CS system or the address used in the PS system is notified to the mobile terminal as the information on the address handling method.
